# DEMANDE DE BREVET EUROPEEN

(11) **EP 3 170 596 A1**
(43) Date de publication de la demande: **24.05.2017**
(21) Numéro de dépôt: 16198974.4
(22) Date de dépôt: 15.11.2016
(51) Int. Cl.: B23B 31/16, A61C 3/00

(54) **PORTE-OUTIL**

(30) Priorité: 23.11.2015 FR 1561214
(71) Demandeur: Fabrications Automatiques Gerbelot, 74300 Cluses (FR)
(72) Inventeur: PARMENTIER, Alain, 74300 CLUSES (FR)
(74) Mandataire: Cabinet Poncet

(57) **Abrégé**

Porte-outil (1) pour le travail d'un maître-modèle ou d'une prothèse dentaire, comportant un manche de préhension (2) à paroi latérale périphérique de préhension (10), des moyens de réception (3) qui prolongent le manche de préhension (2) depuis l'une des première (2a) ou deuxième (2b) extrémités, et comportant des mors (4a-4c) destinés à recevoir et retenir un outil (5), et une bague annulaire (8) permettant de solliciter les mors (4a-4c) pour retenir ledit outil (5) par pincement et comportant une jupe périphérique (11) annulaire étant en permanence à recouvrement d'une partie de la paroi latérale périphérique de préhension (10) du manche de préhension (2) lors des déplacements de la bague annulaire (8) entre ses positions de libération et de retenue.

## Description

La présente invention concerne le domaine dentaire, et concerne plus particulièrement un porte-outil pour le modelage d'un maître-modèle ou d'une prothèse dentaire.

Dans le domaine de la restauration prothétique dentaire, on utilise une reproduction en positif de la mâchoire du patient, appelée maître-modèle. Ce maître-modèle est généralement fabriqué en plâtre, notamment à partir d'une empreinte des arcades maxillaire et mandibulaire du patient. De la cire peut également être ajoutée pour reproduire les gencives du patient.

Le maître-modèle est utilisé pour vérifier l'adéquation d'une prothèse à son lieu d'implantation dans la bouche du patient, en contrôlant notamment les points d'occlusion.

Pour modeler le plâtre constituant le maître-modèle, ou pour modeler la cire constituant les gencives ou la prothèse à fabriquer (par un procédé à cire perdue), le prothésiste dentaire utilise un grand nombre d'outils à embouts de diverses formes (plus ou moins tranchants, plus ou moins pointus, plus ou moins courbes, etc.) disposés de façon fixe au bout d'un manche de préhension.

Le prothésiste dentaire doit ainsi faire l'acquisition de ces nombreux outils, ce qui constitue un coût non négligeable. Et le prothésiste dentaire doit prendre soin de bien nettoyer ces outils régulièrement.

Les documents US 2012/077148 A1 et JP H02 131413 U1 décrivent des porte-outils selon le préambule de la revendication 1. Dans chacun de ces porte-outils, lorsque la bague de serrage est dévissée, il se crée un interstice axial entre la paroi latérale périphérique de préhension du manche de préhension et la bague de serrage, de telle sorte que du plâtre ou de la cire peut pénétrer entre le manche de préhension et la bague de serrage et entraîner un dysfonctionnement.

Un problème proposé par la présente invention est de réduire les coûts que doit supporter un prothésiste dentaire pour disposer d'outils lui permettant de modeler du plâtre ou de la cire. Simultanément, l'invention vise à permettre une bonne protection contre les salissures de plâtre et de cire.

Pour atteindre ces objets ainsi que d'autres, l'invention propose un porte-outil pour le travail d'un maître-modèle ou d'une prothèse dans le domaine dentaire, comportant un manche de préhension s'étendant selon une direction longitudinale entre une première extrémité et une deuxième extrémité, dans lequel :
- le porte-outil comporte des moyens de réception qui prolongent le manche de préhension depuis l'une des première ou deuxième extrémités, et comportant des mors destinés à recevoir et retenir entre eux la queue d'un outil,
- le porte-outil comporte une bague annulaire à paroi périphérique continue, sélectivement déplaçable entre une position de libération, dans laquelle les mors sont suffisamment distants entre eux de façon à autoriser l'introduction ou le retrait d'un outil, et une position de retenue, dans laquelle la bague annulaire sollicite les mors les uns vers les autres pour être plus proches les uns des autres que dans la position de libération de façon à retenir entre eux ledit outil par pincement,
- lors des déplacements entre la position de libération et la position de retenue, la paroi périphérique continue de la bague annulaire reste en permanence à recouvrement latéral des mors des moyens de réception,
- le manche de préhension comporte une paroi latérale périphérique de préhension ;
selon l'invention, la bague annulaire comporte une jupe périphérique annulaire qui est en permanence à recouvrement d'une partie de la paroi latérale périphérique de préhension du manche de préhension lors des déplacements de la bague annulaire entre ses positions de libération et de retenue.

Le prothésiste dentaire n'a ainsi à faire l'acquisition que d'un unique manche de préhension et de divers outils se présentant comme de simples embouts se montant à une extrémité dudit manche de préhension. Cela permet de réduire considérablement les coûts pour le prothésiste dentaire.

Les moyens de réception ont une structure simple pour permettre un changement d'outil rapide et aisé afin de ne pas retarder inutilement le prothésiste dentaire dans son travail.

La bague annulaire protège quant à elle efficacement les mors de réception en limitant les risques que des salissures de plâtre et de cire viennent s'accumuler entre les mors et ne gênent leur fonctionnement.

Lorsque le porte-outil est utilisé pour modeler du plâtre ou de la cire ou lors d'un changement d'outil, le recouvrement permanent d'une partie de la paroi latérale périphérique de préhension du manche de préhension par la jupe périphérique annulaire de la bague annulaire limite efficacement les risques d'un dysfonctionnement provoqué par la pénétration de plâtre ou de cire entre le manche de préhension et la bague annulaire. On évite en effet, lorsque la bague de serrage est dévissée, que se crée un interstice axial (entre le manche de préhension et la bague de serrage) dans lequel du plâtre ou de la cire pourrait pénétrer et entraîner un dysfonctionnement.

De préférence, la bague annulaire peut être en acier inoxydable. Cela limite les risques d'encrassement de la bague annulaire par du plâtre, le plâtre adhérant peu sur de l'acier inoxydable.

Avantageusement, la bague annulaire peut comporter un ou plusieurs reliefs en creux ou en bosse sur la face externe de sa paroi périphérique. Ces reliefs en creux ou en bosse procurent une préhension fiable du porte-outil et à proximité de l'outil pour permettre un travail précis du prothésiste dentaire.

Avantageusement, on peut prévoir que :
- la paroi latérale périphérique de préhension comporte, au voisinage de l'extrémité à partir de laquelle s'étendent les moyens de réception, un tronçon cylindrique à section transversale circulaire présentant un premier diamètre,
- la jupe périphérique de la bague annulaire comporte un logement cylindrique à section transversale interne circulaire présentant un deuxième diamètre, ledit deuxième diamètre étant supérieur au premier diamètre, de préférence peu supérieur au premier diamètre, de façon à pouvoir venir recouvrir au moins partiellement ledit tronçon cylindrique de paroi latérale périphérique de préhension.

De telles sections transversales circulaires sont compatibles avec un actionnement rotatif de la bague annulaire pour déplacer celle-ci entre ses positions de libération et de retenue, tout en rendant possible un écart suffisamment faible et constant entre la jupe de la bague annulaire et le manche de préhension pour limiter encore plus efficacement la pénétration de plâtre ou de cire entre le manche de préhension et la bague annulaire.

De préférence, entre la position de libération et la position de retenue, la bague annulaire peut être portée par l'intermédiaire de moyens de liaison situés entre les mors des moyens de réception et ladite première ou deuxième extrémité depuis laquelle s'étendent les moyens de réception.

Du fait que les moyens de liaison sont confinés entre le manche de préhension et les mors, ils sont au moins en partie protégés par la bague annulaire pour limiter les risques que des salissures de plâtre ou de cire viennent gripper les moyens de liaison. Cela est particulièrement utile lorsque les moyens de liaison comportent un filetage externe adapté pour coopérer par vissage avec un filetage interne de la bague annulaire, filetages qui sont particulièrement sensibles aux salissures et aptes à retenir les salissures en fond de filet.

Avantageusement, le manche de préhension peut s'étendre selon la direction longitudinale, entre sa première extrémité et sa deuxième extrémité, selon une longueur comprise entre environ 80 mm et environ 120 mm.

Le manche de préhension est ainsi suffisamment long pour permettre une bonne préhension par le prothésiste dentaire, mais également suffisamment court pour éviter de gêner le prothésiste dentaire dans son travail.

De préférence, le manche de préhension peut être en aluminium ou en alliage d'aluminium. Le manche de préhension présente ainsi un poids contenu, voire réduit, pour éviter de fatiguer inutilement le poignet du prothésiste dentaire.

D'autres objets, caractéristiques et avantages de la présente invention ressortiront de la description suivante de modes de réalisation particuliers, faite en relation avec les figures jointes, parmi lesquelles :
- la figure 1 est une vue en perspective éclatée d'un outil et d'un porte-outil selon un premier mode de réalisation selon l'invention ;
- la figure 2 est une vue éclatée de côté du porte-outil de la figure 1 ;
- la figure 3 est une vue partielle en coupe du porte-outil des figures 1 et 2, avec une bague annulaire en position de libération ;
- la figure 4 est une vue partielle en coupe du porte-outil des figures 1 et 2, avec la bague annulaire en position de retenue ;
- la figure 5 est une vue de côté d'un porte-outil selon un deuxième mode de réalisation selon l'invention.

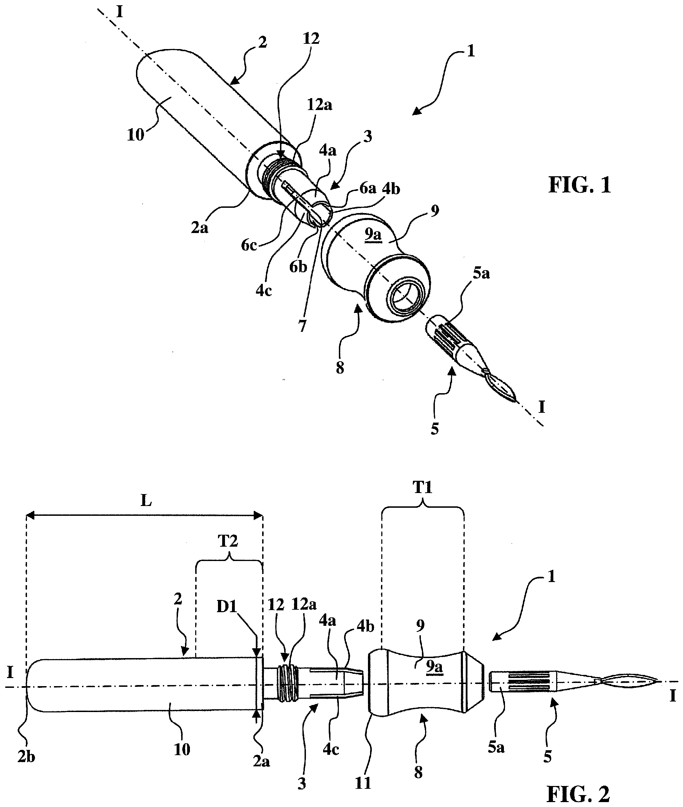

Sur les figures 1 à 4 et 5 sont respectivement illustrés deux modes de réalisation particuliers de porte-outils selon l'invention pour le modelage d'un maître-modèle ou d'une prothèse dans le domaine dentaire.

Dans le premier mode de réalisation illustré sur les figures 1 à 4, le porte-outil 1 comporte un manche de préhension 2 s'étendant selon une direction longitudinale I-I entre une première extrémité 2a et une deuxième extrémité 2b.

Le porte-outil comporte des moyens de réception 3 prolongeant le manche de préhension 2 depuis la première extrémité 2a. Les moyens de réception 3 comportent trois mors 4a à 4c concentriques, répartis régulièrement et destinés à recevoir et retenir entre eux la queue 5a d'un outil 5.

De façon plus détaillée, les mors 4a à 4c sont séparés les uns des autres par des rainures longitudinales 6a à 6c et entourent un logement de réception 7 dans lequel peut pénétrer et être retenue la queue 5a de l'outil 5.

Les moyens de réception 3 sont fabriqués d'une seule pièce avec le manche de préhension 2, ce qui procure une structure simple et robuste.

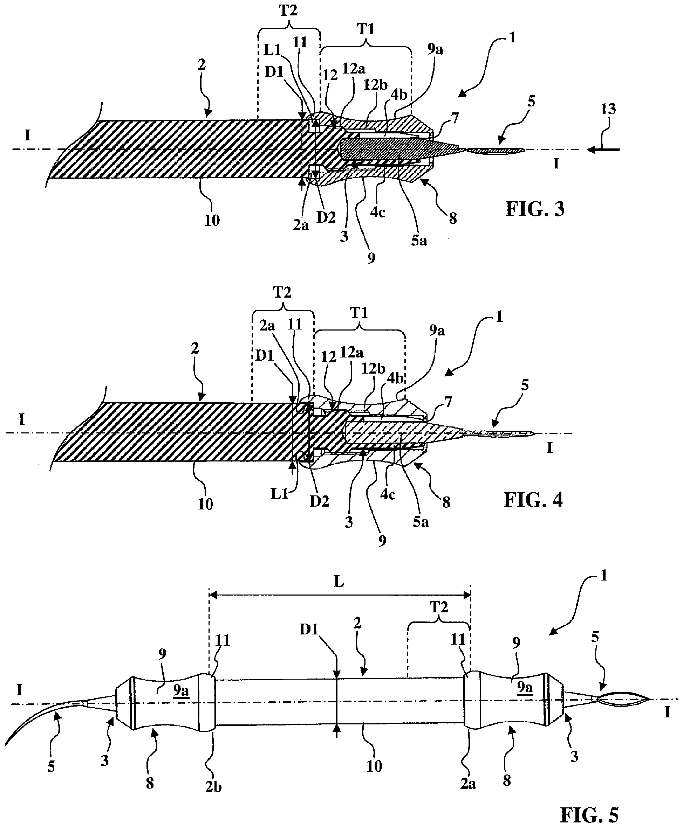

Le porte-outil 1 comporte également une bague annulaire 8 à paroi périphérique 9 continue (c'est-à-dire non ajourée ou dépourvue de lumière traversante). La bague annulaire 8 est sélectivement déplaçable entre une position de libération (figure 3), dans laquelle les mors 4a à 4c sont suffisamment distants entre eux de façon à autoriser l'introduction ou le retrait de la queue 5a de l'outil 5 dans le logement de réception 7 ménagé entre eux, et une position de retenue (figure 4), dans laquelle la bague annulaire 8 sollicite les mors 4a à 4c les uns vers les autres pour être plus proches les uns des autres que dans la position de libération de façon à retenir entre eux ladite queue 5a de l'outil 5 par pincement.

On observe plus particulièrement sur les figures 3 et 4 que lors des déplacements entre la position de libération (figure 3) et la position de retenue (figure 4) la paroi périphérique 9 continue de la bague annulaire 8 reste en permanence à recouvrement latéral des mors 4a à 4c des moyens de réception 3.

La bague annulaire 8 est en acier inoxydable pour limiter les adhérences du plâtre.

Pour faciliter la préhension du porte-outil 1, la bague annulaire 8 comporte un relief en creux sur la face externe 9a de sa paroi périphérique 9. De façon plus précise, on voit plus particulièrement sur la figure 2 que la face externe 9a de la paroi périphérique 9 comporte un tronçon T1 à profil longitudinal concave. Il doit être noté que le tronçon T1 peut avoir une forme de révolution, comme illustré sur les figures 3 et 4, ou peut au contraire avoir une forme non régulière autour de la direction longitudinale I-I.

On voit plus particulièrement sur les figures 3 et 4 que le manche de préhension 2 comporte une paroi latérale périphérique de préhension 10, et que la bague annulaire 8 comporte une jupe périphérique 11 annulaire qui est en permanence à recouvrement d'une partie de la paroi latérale périphérique de préhension 10 du manche de préhension 2 lors des déplacements de la bague annulaire 8 entre ses positions de libération (figure 3) et de retenue (figure 4).

La paroi latérale périphérique de préhension 10 comporte, au voisinage de la première extrémité 2a portant les moyens de réception 3, un tronçon cylindrique à section transversale circulaire présentant un premier diamètre D1. En l'espèce, le manche de préhension est cylindrique sur toute sa longueur. Il pourrait toutefois comporter des tronçons concaves et/ou convexes sur une partie de sa longueur située au-delà du tronçon cylindrique T2 en direction de sa deuxième extrémité 2b.

De son côté, la jupe périphérique 11 de la bague annulaire 8 comporte un logement L1 cylindrique à section transversale interne circulaire présentant un deuxième diamètre D2, ledit deuxième diamètre D2 étant supérieur au premier diamètre D1, de préférence peu supérieur au premier diamètre D1.

De cette façon, la bague annulaire 8 peut en permanence (lors des déplacements de la bague annulaire 8 entre ses positions de libération et de retenue) recouvrir au moins partiellement ledit tronçon cylindrique T2 de paroi latérale périphérique de préhension 10. Le logement L1 cylindrique reçoit le tronçon T2 cylindrique avec un jeu radial constant, qui peut être dimensionné de façon à être suffisamment faible pour limiter efficacement le risque de pénétration d'impuretés (de plâtre et/ou de cire notamment). Lorsque la bague de serrage 8 est dévissée, il ne se crée aucun interstice axial (entre le manche de préhension 2 et la bague de serrage 8) dans lequel du plâtre ou de la cire pourrait pénétrer et entraîner un dysfonctionnement.

Entre la position de libération (figure 3) et la position de retenue (figure 4), la bague annulaire 8 est portée par les moyens de réception 3 par l'intermédiaire de moyens de liaison 12 situés entre les mors 4a à 4c des moyens de réception 3 et la première extrémité 2a que prolongent les moyens de réception 3. En l'espèce, les moyens de liaison 12 comportent un filetage externe 12a adapté pour coopérer par vissage avec un filetage interne 12b de la bague annulaire 8.

Le manche de préhension 2 s'étend selon la direction longitudinale I-I entre sa première extrémité 2a et sa deuxième extrémité 2b selon une longueur L comprise entre environ 80 mm et environ 120 mm.

Le manche de préhension est avantageusement fabriqué en aluminium ou dans un alliage d'aluminium. Le deuxième mode de réalisation de porte-outil 1 illustré sur la figure 5 diffère du porte-outil 1 des figures 1 à 4 en ce qu'il comporte des moyens de réception 3 et une bague annulaire 8 à chacune de ses première et deuxième extrémités 2a et 2b. Le prothésiste dentaire dispose ainsi, sur un seul et même manche de préhension 2, de deux outils 5 différents lui permettant d'effectuer des tâches différentes sans changement d'outil.

L'utilisation du porte-outil 1 selon l'invention va être explicitée à l'aide des figures 1 à 4.

Lorsque le prothésiste dentaire souhaite modeler du plâtre ou de la cire pour la réalisation d'un maître-modèle ou d'une prothèse dentaire, il saisit son porte-outil 1 par l'intermédiaire du manche de préhension 2.

Pour installer un outil 5 particulier à la première extrémité 2a du manche de préhension 2, le prothésiste dentaire entraîne la bague annulaire 8 en rotation autour de la direction longitudinale I-I de façon à amener celle-ci dans la position de libération (figure 3), dans laquelle les mors 4a à 4c sont suffisamment distants entre eux de façon à autoriser l'introduction de la queue 5a de l'outil 5 dans le logement de réception 7 ménagé entre les mors 4a à 4c. La bague annulaire 8 n'est pas séparée du manche de préhension 2 et reste engagée au niveau de son filetage interne 12b avec le filetage externe 12a des moyens de liaison 12. En position de libération, la bague annulaire 8 recouvre complètement latéralement les mors 4a à 4c pour éviter que du plâtre ou de la cire pénètre latéralement au niveau des mors 4a et 4c et gêne leur fonctionnement. La bague annulaire 8 reste également en permanence à recouvrement latéral d'une partie de la première extrémité 2a du manche de préhension 2 au moyen de la jupe périphérique 11. On limite ainsi les risques que du plâtre ou de la cire (souvent présents sur les mains du prothésiste dentaire) pénètre entre la première extrémité 2a du manche de préhension 2 et la bague annulaire 8.

Une fois que le prothésiste dentaire a introduit la queue 5a de l'outil 5 dans le logement de réception 7 par un mouvement de translation illustré par la flèche 13 (figure 3) il déplace par vissage la bague annulaire 8 vers sa position de retenue (figure 4), dans laquelle la bague annulaire 8 sollicite les mors 4a à 4c les uns vers les autres de façon à ce que les mors 4a à 4c retiennent entre eux la queue 5a de l'outil 5 par pincement.

En position de retenue (figure 4), la bague annulaire 8 est toujours à recouvrement latéral des mors 4a à 4c des moyens de réception 3, et son recouvrement de la première extrémité 2a du manche de préhension 2 a augmenté.

Le prothésiste dentaire peut alors travailler le plâtre ou la cire au moyen de l'outil 5. Lorsque le prothésiste dentaire a besoin d'utiliser un autre outil 5, il déplace la bague annulaire 8 par dévissage depuis la position de retenue (figure 4) vers la position de libération (figure 3) et extrait l'outil par un mouvement de translation inverse à celui illustré par la flèche 13 sur la figure 3. Les moyens de réception 3 sont alors prêts à recevoir un nouvel outil 5.

Le fonctionnement du porte-outil 1 illustré sur la figure 5 est en tout point comparable à celui du porte-outil 1 illustré sur les figures 1 à 4, le porte-outil 1 de la figure 5 ne différant du porte-outil 1 des figures 1 à 4 que par la présence de moyens de réception 3 et d'une bague annulaire 8 supplémentaires à la deuxième extrémité 2b du manche de préhension 2. Le porte-outil 1 de la figure 5 permet ainsi au prothésiste dentaire d'utiliser en alternative deux outils 5 différents, sans avoir à démonter les outils 5 entre chaque utilisation.

Sur les figures 1 à 4, l'outil 5 est une spatule. Sur la figure 5, l'un des outils est une spatule à la première extrémité 2a du porte-outil 1, tandis que l'autre est une griffe courbe à la deuxième extrémité 2b du porte-outil. On peut prévoir d'autres formes d'outils, et notamment une ou plusieurs tiges de tournevis pour visser/dévisser des éléments prothétiques dentaires (piliers dentaires notamment) sur des analogues d'implants contenus dans le maître-modèle pour élaborer une prothèse dentaire implanto-portée.

La présente invention n'est pas limitée aux modes de réalisation qui ont été explicitement décrits, mais elle en inclut les diverses variantes et généralisations contenues dans le domaine des revendications ci-après.

## Revendications

1. Porte-outil (1) pour le travail d'un maître-modèle ou d'une prothèse dans le domaine dentaire, comportant un manche de préhension (2) s'étendant selon une direction longitudinale (I-I) entre une première extrémité (2a) et une deuxième extrémité (2b), dans lequel :
- le porte-outil (1) comporte des moyens de réception (3) qui prolongent le manche de préhension (2) depuis l'une des première (2a) ou deuxième (2b) extrémités, et comportant des mors (4a-4c) destinés à recevoir et retenir entre eux la queue (5a) d'un outil (5),
- le porte-outil (1) comporte une bague annulaire (8) à paroi périphérique (9) continue, sélectivement déplaçable entre une position de libération, dans laquelle les mors (4a-4c) sont suffisamment distants entre eux de façon à autoriser l'introduction ou le retrait d'un outil (5), et une position de retenue, dans laquelle la bague annulaire (8) sollicite les mors (4a-4c) les uns vers les autres pour être plus proches les uns des autres que dans la position de libération de façon à retenir entre eux ledit outil (5) par pincement,
- lors des déplacements entre la position de libération et la position de retenue, la paroi périphérique (9) continue de la bague annulaire (8) reste en permanence à recouvrement latéral des mors (4a-4c) des moyens de réception (3),
- le manche de préhension (2) comporte une paroi latérale périphérique de préhension (10),
**caractérisé en ce que** la bague annulaire (8) comporte une jupe périphérique (11) annulaire qui est en permanence à recouvrement d'une partie de la paroi latérale périphérique de préhension (10) du manche de préhension (2) lors des déplacements de la bague annulaire (8) entre ses positions de libération et de retenue.

2. Porte-outil (1) selon la revendication 1, **caractérisé en ce que** la bague annulaire (8) est en acier inoxydable.

3. Porte-outil (1) selon l'une des revendications 1 ou 2, **caractérisé en ce que** la bague annulaire (8) comporte un ou plusieurs reliefs en creux ou en bosse sur la face externe de sa paroi périphérique (9).

4. Porte-outil (1) selon l'une quelconque des revendications 1 à 3, **caractérisé en ce que** :
- la paroi latérale périphérique de préhension (10) comporte, au voisinage de l'extrémité (2a, 2b) depuis laquelle s'étendent les moyens de réception (3), un tronçon (T2) cylindrique à section transversale circulaire présentant un premier diamètre (D1),
- la jupe périphérique (11) de la bague annulaire (8) comporte un logement (L1) cylindrique à section transversale interne circulaire présentant un deuxième diamètre (D2), ledit deuxième diamètre (D2) étant supérieur au premier diamètre (D1), de préférence peu supérieur au premier diamètre (D1), de façon à pouvoir venir recouvrir au moins partiellement ledit tronçon (T2) cylindrique de paroi latérale périphérique de préhension (10).

5. Porte-outil (1) selon l'une quelconque des revendications 1 à 4, **caractérisé en ce que**, entre la position de libération et la position de retenue, la bague annulaire (8) est portée par l'intermédiaire de moyens de liaison (12) situés entre les mors (4a-4c) des moyens de réception (3) et la première (2a) ou deuxième (2b) extrémité à partir de laquelle s'étendent les moyens de réception (3).

6. Porte-outil (1) selon la revendication 5, **caractérisé en ce que** les moyens de liaison (12) comportent un filetage externe (12a) adapté pour coopérer par vissage avec un filetage interne (12b) de la bague annulaire (8).

7. Porte-outil (1) selon l'une quelconque des revendications 1 à 6, **caractérisé en ce que** le manche de préhension (2) s'étend selon la direction longitudinale (I-I), entre sa première extrémité (2a) et sa deuxième (2b) extrémité, selon une longueur (L) comprise entre environ 80 mm et environ 120 mm.

8. Porte-outil (1) selon l'une quelconque des revendications 1 à 7, **caractérisé en ce que** le manche de préhension (2) est en aluminium ou en alliage d'aluminium.
